# EUROPÄISCHE PATENTANMELDUNG

(11) **EP 2 711 207 A2**
(43) Veröffentlichungstag der Anmeldung: **26.03.2014**
(21) Anmeldenummer: 13180798.4
(22) Anmeldetag: 19.08.2013
(51) Int. Cl.: B60D 1/26, B60D 1/54

(54) **Kugelschwenkmodul**

(30) Priorität: 19.09.2012 DE 102012216798
(71) Anmelder: ZF Friedrichshafen AG, 88038 Friedrichshafen (DE)
(72) Erfinder: Stratmann, Julian, 49074 Osnabrück (DE); Nordloh, Alfons, 49429 Visbek (DE)

(57) **Zusammenfassung**

Vorgeschlagen wird ein Kugelschwenkmodul (2), insbesondere für eine Anhängerkupplung (1), welches einen Kugelzapfen (11) aufweist, welcher Kugelzapfen (11) eine Gelenkkugel (10) umfasst und in einem Gehäuse (12) gelagert ist, wobei in dem Kugelzapfen (11) eine Ausnehmung (42) vorgesehen ist, in welcher ein Sperrbolzen (44) axial verschiebbar angeordnet ist, um eine senkrecht zu dem Sperrbolzen (44) bewegbare Einrichtung (60) zum Verriegeln und Entriegeln des Kugelschwenkmoduls (2) zu betätigen, wobei zum motorischen Betätigen des Sperrbolzens (44) ein Motor (7) vorgesehen ist, wobei der Motor (7) über eine Verbindung aus axial starren Elementen (23, 34, 50) mit dem Sperrbolzen (44) gekoppelt ist. Das vorgeschlagene Kugelschwenkmodul (2) zeichnet sich dadurch aus, dass der Antrieb (7) und die genannte Verbindung dazu ausgebildet sind, den Sperrbolzen (44) innerhalb der Ausnehmung (42) motorisch in seine Verriegelungsstellung zu verschieben und dabei die Einrichtung (60) zum Verriegeln des Kugelschwenkmoduls (2) zu betätigen.

## Beschreibung

Die Erfindung betrifft ein Kugelschwenkmodul für eine Anhängerkupplung gemäß dem Oberbegriff des Anspruchs 1.

Im Stand der Technik sind viele Ankopplungsvarianten für Anhängerkupplungen bekannt, um sie an einem Fahrzeug zu befestigen. Sie reichen von einfachen, starren Verbindungen über abnehmbare Steck- oder mechanische Schwenksysteme bis hin zu vollelektrisch schwenkbaren Anhängerkupplungen. Letztere heben sich dadurch ab, dass keinerlei Betätigungsaufwand durch den Anwender direkt an der Anhängerkupplung erfolgen muss, um ein Ein- und Ausschwenken oder Verriegeln der Anhängerkupplung zu bewirken.

Bekannt sind weiterhin Anhängerkupplungen mit einem Schwenkmodul, welches eine überlagerte Dreh- und Kippbewegung ermöglicht. Ein derartiges Schwenkmodul ist beispielsweise in DE 10 2008 002 207 A1 beschrieben. Diese Überlagerungsbewegung hat gegenüber einer Anhängerkupplung, welche sich nur um eine Achse dreht, den Vorteil, dass sie einen kleineren Schwenkraum benötigt, was letztlich Bauraumvorteile bietet. Die Dreh- und Kippbewegung wird realisiert durch ein Kugelgelenk, welches mittels einer Zwangsführung eines Kugelzapfens eine Verdrehung um seine Längsachse ermöglicht, bei welcher gleichzeitig eine seitliche Auslenkung erfolgt. Das Kugelgelenk ist in einem Kugelgelenkgehäuse gelagert.

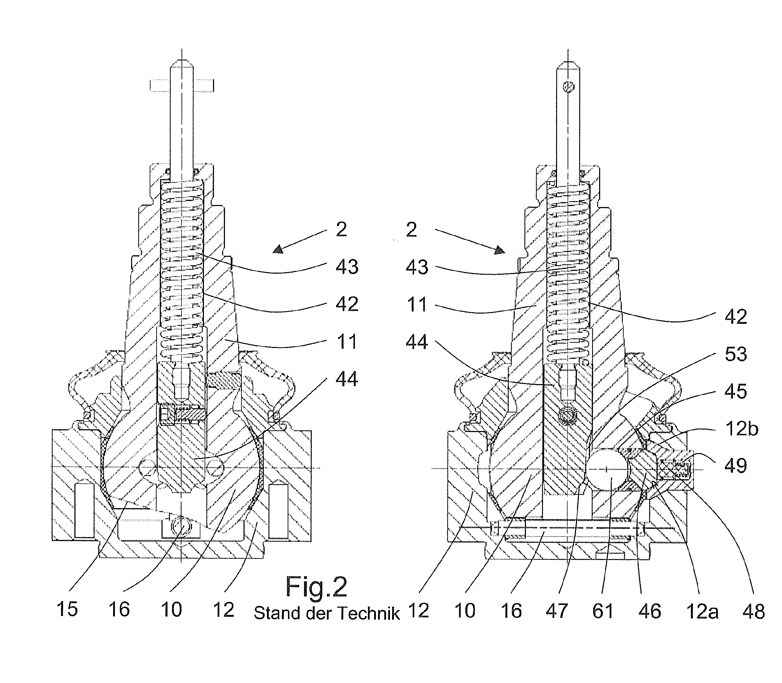

Für die Arretierung des Kugelgelenks bei Anhängerkupplungen ist es bekannt, Verriegelungselemente vorzusehen, die waagerecht nach außen verschoben werden und somit eine Kugel eines Kugelzapfens des Kugelgelenks an einem Kugelgelenkgehäuse arretieren. Hierzu wird ein Sperrbolzen durch Kraftbeaufschlagung mittels einer Zentralfeder in eine Verriegelungsposition gedrückt. Der Sperrbolzen weist an seiner Unterseite bzw. an seinem einen Ende ein abgeschrägtes Ende auf, so dass eine senkrechte Bewegung des Sperrbolzens in die Verrieglungsposition in eine waagerechte Bewegung der Verriegelungselemente überführt wird. Dies ist in der beigefügten Figur 2 aus dem Stand der Technik dargestellt. Soll der Sperrbolzen in der Entriegelungsstellung in dieser Position gesichert werden, so kann über eine Mechanik ein genauer Schaltpunkt eingestellt werden, damit der Sperrbolzen nicht unbeabsichtigt eine Verriegelung auslöst bzw. die Verriegelungselemente durch den Sperrbolzen radial nach außen gedrückt werden, was Schäden an der Kugelschale bewirken kann bzw. eine Schwergängigkeit des Kugelschwenkmoduls hervorrufen würde. Ein Schaltstift verhindert nach dem Entriegeln, das der Sperrbolzens durch die Kraft einer Feder in die Verriegelungsstellung zurückschnellt.

Neben hohen Anforderungen an die Fertigungstoleranzen und einem schwer einstellbaren Schaltpunkt sind die Anzahl an zusätzlichen Einzelteilen, deren Verbauung und Fertigung sehr kostenintensiv. Bei der Verriegelung über die Zentralfeder ergibt sich zudem keine sichere Kontrolle über das erfolgte Verriegeln. Außerdem erlaubt die Entriegelung durch eine nur mittelbare Betätigung des Sperrbolzens über ein Entriegelungselement, wie zum Beispiel ein Seil oder einen Bowdenzug, nur eine ungenaue Handhabung. Hier ist es wünschenswert, eine automatische Ver- und Entriegelung vorzusehen, so dass die Handhabung der Anhängerkupplung für einen Benutzer vereinfacht und eine Kontrolle des Verriegelungszustandes ermöglicht wird.

Aus der DE 10 2007 029 051 A1 ist eine Anhängerkupplung für Kraftfahrzeuge bekannt, bei der zur Freigabe einer Schwenk-Kipp-Bewegung ein Sperrbolzen mittels eines Zahnstangenantriebs entgegen der Wirkung einer zentralen Druckfeder in eine Freigabestellung bewegt wird. Auch hierbei erfolgt die Verriegelung über eine Zentralfeder, mit den weiter oben genannten Nachteilen.

Daher ist es eine Aufgabe der vorliegenden Erfindung, ein Kugelschwenkmodul für eine Anhängerkupplung bereitzustellen, das die obigen Nachteile vermeidet und eine automatisierte Verriegelung eines Kugelschwenkmoduls sicherstellt.

Diese Aufgabe wird durch ein Kugelschwenkmodul mit den Merkmalen gemäß Anspruch 1 gelöst. Bevorzugte Ausführungsformen der Erfindung sind in den abhängigen Ansprüchen definiert.

Bereitgestellt wird ein Kugelschwenkmodul, insbesondere für eine Anhängerkupplung, welches einen Kugelzapfen aufweist, welcher Kugelzapfen eine Gelenkkugel umfasst und in einem Gehäuse gelagert ist, wobei in dem Kugelzapfen eine Ausnehmung vorgesehen ist, in welcher ein Sperrbolzen axial verschiebbar angeordnet ist, um eine im Wesentlichen senkrecht zu dem Sperrbolzen bewegbare Einrichtung zum Verriegeln und Entriegeln des Kugelschwenkmoduls zu betätigen, wobei zum motorischen Betätigen des Sperrbolzens ein Antrieb vorgesehen ist, insbesondere ein Elektromotor, wobei der Antrieb über eine Verbindung aus axial starren Elementen mit dem Sperrbolzen gekoppelt ist. Das Kugelschwenkmodul zeichnet sich dadurch aus, dass der Antrieb und die genannte Verbindung dazu ausgebildet sind, den Sperrbolzen innerhalb der Ausnehmung motorisch in seine Verriegelungsstellung zu verschieben und dabei die Einrichtung zum Verriegeln des Kugelschwenkmoduls zu betätigen. Die Ausnehmung kann als ein insbesondere durchgehendes Loch, vorzugsweise Bohrung koxial zur Längsachse des Kugelzapfens ausgebildet sein. Die Einrichtung zum Verriegeln kann aus Verriegelungselementen oder Verriegelungseinheiten bestehend aus wenigstens einer Kugel oder auch aus einer Kombination von Kugeln, geteilten Ringen und hohlen oder massiven zylinderförmigen Bauteilen gebildet sein, die sich annähernd quer zur Längsachse des Kugelzapfens in geeigneten Bahnen bewegen.

Einerseits kann durch diese Konfiguration auf bestimmte Bauteile, die nach dem Stand der Technik notwendig waren, um eine Verriegelung oder eine Entriegelung zu bewirken, wie beispielsweise die Zentralfeder oder aber ein Bowdenzug zum manuellen (von Hand betätigten) Ziehen und/oder Drücken, und andere damit verbundene Komponenten des aus dem Stand der Technik bekannten Mechanismus, weitgehend oder auch ganz verzichtet werden, da jetzt eine einfache starre, mechanische Struktur vorgesehen ist, die einerseits den Sperrbolzen innerhalb der Ausnehmung motorisch in seine Verriegelungsstellung verschiebt und dabei andererseits zumindest indirekt auch die Einrichtung zum Verriegeln des Kugelschwenkmoduls betätigt. Außerdem bietet die mögliche automatische Verriegelung und Entriegelung mittels des Antriebs dem Benutzer einen großen Bedienungskomfort.

Gemäß einer bevorzugten Ausführungsform umfasst die starre Verbindung ein erstes starres Element, welches erste starre Element mit dem Antrieb gekoppelt ist, und ein zweites starres Element, welches zweite starre Element mit dem Sperrbolzen gekoppelt ist. Beispielsweise kann das erste starre Element ein Zahnrad und das zweite starre Element eine Spindel sein, wobei vorzugsweise das Zahnrad im Wesentlichen konzentrisch um die Spindellängsachse der Spindel herum angeordnet und mit der Spindel zusammenwirkend ausgebildet ist. Eine Spindel, insbesondere Gewindespindel, ist ein rundstabförmiges Maschinenelement, das zusammen mit anderen Elementen eine drehende Bewegung in eine translatorische Bewegung umwandelt, wobei an der Spindel ein Gewinde, z.B. ein Trapezgewinde, ausgebildet ist. Die Spindel verläuft vorzugsweise innerhalb der Ausnehmung des Kugelzapfens und ist mit dem Sperrbolzen kraft- und/oder formschlüssig oder auch stoffschlüssig gekoppelt. Der vorgesehene Antrieb (Elektromotor) überträgt unmittelbar oder mittels einer separaten Antriebswelle bzw. eines Antriebsritzels eine Drehbewegung auf das Zahnrad. Wenn das Zahnrad und die Spindel über einen Formschluss miteinander gekoppelt sind, so bewirkt das Zusammenwirken von Zahnrad und Spindel den translatorischen Antrieb des Sperrbolzens. Da der Antrieb und der Sperrbolzen somit lediglich über starre Elemente miteinander verbunden und keine flexiblen Elemente, wie beispielsweise ein Bowdenzug oder dergleichen, vorhanden sind, kann insbesondere durch Detektion einer Drehstellung des Zahnrads oder der Anzahl der Umdrehungen des Antriebsmotors auch die genaue Position des Sperrbolzens und damit eine Entriegelungs- oder Verriegelungsstellung des Kugelschwenkmoduls detektiert werden.

Zusätzlich oder alternativ kann die Spindelposition auch direkt sensorisch ermittelt werden, wobei wenigstens ein erster Sensor zum Einsatz kommt. In allen diesen Fällen ist die Erfindung nicht auf die Verwendung einer bestimmten Sensorart beschränkt. Beispielsweise kann für die Abfrage der Spindelposition ein Taster eingesetzt werden. Andere verwendbare Sensoren beruhen auf induktiven, kapazitiven oder optischen und somit berührungslosen Wirkprinzipien. Gerade für die Ermittlung der Spindelposition können auch sog. Linearsensoren eingesetzt werden, um einen Verschleiß der Anordnung zu bestimmen und ggf. das Kugelschwenkmodul auszutauschen.

Gemäß noch einer weiteren bevorzugten Ausführungsform weist das Zahnrad ein erstes Gewinde, insbesondere ein Innengewinde, und die Spindel ein zweites Gewinde, insbesondere ein Außengewinde, auf, welche miteinander in Wirkverbindung, insbesondere kämmenden Eingriff stehen. Wenn nun ein Drehfreiheitsgrad der Spindel, beispielsweise mittels einer Arretiereinrichtung, insbesondere mittels eines Zylinderstifts, der in eine Aufnahme an der Spindel eingreift, blockiert wird, bewegt sich aufgrund der Drehbewegung des am Kugelzapfen ortsfest gehaltenen Zahnrads die Spindel linear innerhalb des Kugelzapfens aufwärts bzw. abwärts, je nach Drehrichtung. Die lineare Bewegung der Spindel wird auf den Sperrbolzen übertragen. Somit verriegelt bzw. entriegelt das Verriegelungssystem Bewegen des Sperrbolzens in die jeweilige Richtung durch Einwirken der starren Elemente Zahnrad und Spindel. Die Vorteile gegenüber einem flexiblen Element, zum Beispiel einem Bowdenzug, sind eine besser definierte Bewegung, die bereits erwähnte genauere Positionserkennung der Spindel und eine einfache Sperrbolzenrückhaltung durch Selbsthemmung und/oder alternativ durch entsprechende andauernde Aktivierung des Antriebs (Blockierung des Antriebs mittels Motorstrom). Zudem ist ein kraftbeaufschlagtes Nachdrücken des Sperrbolzens in die Verriegelungsposition möglich, indem mittels des Antriebs über die Spindel eine linear wirkende Kraft auf den Sperrbolzen ausgeübt wird. Hierdurch kann die oben genannte Einrichtung zum Verriegeln fest in die Verriegelungspositionen gedrückt werden. Dies verringert die Elastizität des Gesamtsystems und ermöglicht eine höhere Verriegelungskraft, als dies allein durch Vorsehen einer Feder gemäß dem Stand der Technik möglich wäre. Dieses ist insbesondere notwendig, wenn bei dem Kugelschwenkmodul die Anhängelasten bzw. -kräfte von der Kugelstange über die Verriegelungselemente an die Karosserie geleitet werden sollen.

Vorzugsweise wird das Zahnrad durch den genannten Antrieb bzw. Motor, vorzugsweise einen Elektromotor, angetrieben, was eine manuelle (von Hand) Bedienung gänzlich überflüssig macht und den Komfort für den Benutzer erheblich steigert.

Gemäß noch einer weiteren bevorzugten Ausführungsform sind die Spindel und der Sperrbolzen kraft- und/oder formschlüssig oder stoffschlüssig vorzugsweise über einen Sprengring und zugehörige Verraststrukturen, insbesondere einer Nut an Spindel beziehungsweise Sperrbolzen miteinander verbunden. Dabei kann ein Spindelende in einer entsprechenden Aufnahme (Sackloch) in dem Sperrbolzen gehalten sein, ohne dass die Erfindung allerdings auf Sperrbolzen mit einem Sackloch beschränkt wäre. Die Verbindung über einen Sprengring und die zugehörigen Verraststrukturen ermöglicht eine gewisse Bewegung der Spindel relativ zum Sperrbolzen in einem durch die Anordnung von Sprengring und Verraststrukturen bestimmten Hubbereich innerhalb der genannten Aufnahme und abhängig von deren Tiefe. Dadurch kann die Spindel während des Anhängerbetriebs eine Ruheposition einnehmen, ohne Belastungen, die über den Sperrbolzen eingeleitet werden, aufnehmen zu müssen.

In diesem Zusammenhang kann im Zuge einer Weiterbildung der Erfindung vorgesehen sein, dass das Kugelschwenkmodul zusätzlich noch eine (zentrale) Druckfeder aufweist, wie sie an sich bereits aus dem Stand der Technik bekannt ist. Die Feder kann um die Spindel herum innerhalb der Ausnehmung des Kugelzapfens angeordnet sein. Im Betrieb sorgt zunächst der Antrieb über die Spindel und den Sperrbolzen für die gewünschte Verriegelung, indem der Sperrbolzen in der Ausnehmung möglichst weit in seine Verriegelungsposition bewegt wird, wobei er die Einrichtung zum Verriegeln des Kugelschwenkmoduls betätigt. Bei einer solchen Ausgestaltung ist es möglich, anschließend die Spindel etwas zurückzuziehen, so dass nur noch die Feder den Sperrbolzen in die Verriegelungsposition drückt, wobei Spindel und Sperrbolzen in gewisser Weise entkoppelt sind.

Vorteilhaft ist auch, wenn bei einer entsprechenden Weiterbildung ein zweiter Sensor vorgesehen ist, welcher die Position (Drehstellung) eines weiteren Zahnrads detektiert, wobei das weitere Zahnrad mit dem Gehäuse des Kugelschwenkmoduls gekoppelt ist, so dass über die Position dieses Zahnrads auch die Position des Gehäuses und folglich die Stellung einer mit dem Gehäuse verbundenen Kugelstange detektierbar ist. Der zweite Sensor zur Erfassung der Schwenkposition kann beispielsweise ein Taster, ein Induktivsensor, ein Kapazitivsensor, ein Hallsensor, ein magnetostriktiver Sensor oder dergleichen berührungsloser Sensor sein, welcher die Position des Zahnrads erfasst. Das genannte Zahnrad kann zu diesem Zweck bestimmte Strukturen aufweisen, auf welche der Sensor anspricht, beispielsweise Erhöhungen oder Vorsprünge, Ausnehmungen, eingesetzte Permanentmagneten, optische Markierungen oder dgl., je nach verwendetem Sensortyp. Da die Position des weiteren Zahnrads über die Mechanik des Kugelschwenkmoduls an die Position des Gehäuses gekoppelt ist, detektiert der erste Sensor somit mittelbar auch die Position des Gehäuses. Es sei betont, dass es sich bei diesem weiteren Zahnrad grundsätzlich um ein anderes Zahnrad als dasjenige Zahnrad handelt, welches zum Antreiben der Spindel und damit zum Bewirken der Ent-/Verriegelung Verwendung findet. Das weitere Zahnrad dient zum Bewirken einer Dreh-Kipp-Bewegung der Kugelstange, allerdings entspricht beispielsweise die ausgeschwenkte Betriebsposition der Kugelstange gerade der angesprochenen Verriegelungsstellung des Sperrbolzens, so dass das weitere Zahnrad auch zur Ermittlung der Verriegelungsstellung des Sperrbolzens heranziehbar ist.

Vorzugsweise detektiert der zweite Sensor eine erste Position des weiteren Zahnrads, welche einer Betriebsposition eines an dem Kugelschwenkmodul vorgesehenen Anhängerhakens (Kugelstange) entspricht, und eine zweite Position des weiteren Zahnrads, welche einer Ruheposition des Anhängerhakens entspricht. Der Anhängerhaken ist starr mit dem Gehäuse des Kugelschwenkmoduls verbunden. Damit ergibt sich aus der Position des Gehäuses die Position des Anhängerhakens. Wie oben beschrieben, kann über die Position des weiteren Zahnrads mittelbar die Position des Gehäuses und somit auch die Position des Anhängerhakens bzw. der Kugelstange detektiert werden.

Gemäß einer weiteren bevorzugten Ausführungsform signalisieren die erste Position und die zweite Position, welche vorzugsweise um etwa 180° zueinander versetzt sind, was also - ohne Beschränkung - einer halben Drehung des weiteren Zahnrads entspricht, jeweils eine Verriegelungsposition, d.h. eine Ruheposition mit eingeschwenkter Kugelstange und eine Betriebs- bzw. Sicherungsposition mit ausgeschwenkter Kugelstange. Wenn insbesondere diese letztere Position erreicht ist, stoppt die Schwenkung des Schwenkmoduls, d.h. der separate Antrieb für das weitere Zahnrad, und der Motor/Antrieb für die Verriegelung wird aktiviert, wie oben beschrieben. Zur Positionserkennung kann hierbei das weitere Zahnrad, welches vorzugsweise auf dem Kugelzapfen drehbar gelagert ist, verwendet werden - wie ebenfalls oben beschrieben. Dadurch kann effektiv eine Scheinverriegelung verhindert werden.

In einer alternativen vorzugsweisen Ausführungsform kann die Schwenkung ein Stück über die erste und/oder zweite Position hinaus fahren, nachdem durch den ersten und/oder zweiten Sensor bereits das Signal für das Erreichen der Ruhe- oder Betriebsposition gegeben worden ist. Wenn dann das Kugelschwenkmodul verriegelt werden soll, kann die Verriegelungseinheit nicht vollständig einfahren. Wenn jetzt wiederum ein Stück zurückgeschwenkt wird, rasten die Verriegelungen hörbar ein, was die Funktionssicherheit erhöht und die Funktionskontrolle verbessert. Alternativ kann die Schwenkung sogar etwas vor dem Erreichen der genannten Positionen stehen bleiben. Dann wird die Verriegelung aktiviert, und das Modul wird anschließend oder zeitgleich weiter verschwenkt. Dadurch kann eine Verspannung des Systems erreicht werden.

Vorteilhaft ist darüber hinaus, wenn noch ein weiterer Sensor (der erste Sensor) vorgesehen ist, welcher unmittelbar die Position der Spindel detektiert. Auch dieser Sensor kann als Taster, Induktivsensor, Kapazitivsensor, Hallsensor oder magnetostriktiver oder optischer Sensor ausgeführt sein und fragt die Position der Spindel ab. Bei einer definierten Eintauchtiefe in den Kugelzapfen kann dadurch ein sicherer Verriegelungszustand erkannt werden. Erst wenn dieser Zustand erreicht ist, wird ein vollständiges Verriegeln signalisiert, z.B. durch ein optisches oder akustisches Signal.

Gemäß einer bevorzugten Ausführungsform ist das Gehäuse schwenkbar um den Kugelzapfen herum gelagert, welches Gehäuse seinerseits mit der Kugelstange verbunden ist. Gehäuse und Kugelstange sind bezüglich einer Drehbewegung um die Längsachse des Kugelzapfens, welche Drehbewegung vorzugsweise durch das erwähnte weitere Zahnrad bewirkbar ist, gekoppelt. Hinsichtlich einer Kippbewegung um eine dazu im Wesentlichen senkrechte Kippachse ist die Bewegung von der Längsachse entkoppelt. Durch Ausführen einer aus einer Drehung von Kugelstange mit Gehäuse und einer Kippung zusammengesetzten bzw. bereichsweise überlagerten Dreh-Kipp-Bewegung wird erzielt, dass ein kleinerer Schwenkraum benötigt wird, um die Anhängerkupplung bzw. die Kugelstange zwischen einer ausgeschwenkten Betriebsposition und einer eingeschwenkten Ruheposition zu bewegen.

Gemäß noch einer bevorzugten Ausführungsform weist die Gelenkkugel des Kugelzapfens zu diesem Zweck eine nicht ebene Regelfläche auf, die mit einem an bzw. in dem Gehäuse vorgesehenen Regelelement, insbesondere mit einem Zwangsführungsstift, in Anlage steht, so dass diese Anlage eine Zwangsführung des Kugelzapfens bewirkt, bei welcher der Kugelzapfen bei einer Bewegung zwischen der Betriebsposition und der Ruheposition um die Drehachse gedreht und zudem das Gehäuse um die Kippachse verkippt wird. Diese Konfiguration bietet eine bauraumsparende Lösung zur Schaffung eines Schwenkmoduls, welches die bereits erwähnte Dreh-Kipp-Bewegung ausführen kann.

Im Nachfolgenden werden Ausführungsformen der Erfindung unter Bezugnahme auf die beigefügte Zeichnung näher beschrieben. Es zeigen:
Fig. 1 eine Ansicht einer vollständigen Anhängerkupplung mit dem Schwenkmodul gemäß einer Ausführungsform;
Fig. 2 zwei Schnittansichten eines Kugelschwenkmoduls mit Verriegelung und Entriegelung gemäß Stand der Technik;
Fig. 3 einen Schnitt durch Teile eines Kugelschwenkmoduls gemäß einer Ausführungsform zur Erläuterung der Ver- und Entriegelungsfunktion;
Fig. 4 eine detaillierte Ansicht der Spindel eines Kugelschwenkmoduls gemäß einer Ausführungsform;
Fig. 5 eine detaillierte Ansicht des Antriebszahnrads für die Spindel eines Kugelschwenkmoduls gemäß einer Ausführungsform;
Fig. 6 eine detaillierte Ansicht der Spindel und des Sperrbolzens eines Kugelschwenkmoduls gemäß einer Ausführungsform;
Fig. 7 eine perspektivische Ansicht eines Kugelschwenkmoduls gemäß einer Ausführungsform;
Fig. 8A - 8E Ansichten von Bauteilen einer Antriebseinheit für eine Dreh-KippBewegung des in Figur 7 dargestellten Kugelschwenkmoduls; und
Fig. 9 eine Darstellung einer Ausführung des Antriebszahnrads für die Dreh-Kipp-Bewegung aus den Figuren 8A - 8E.

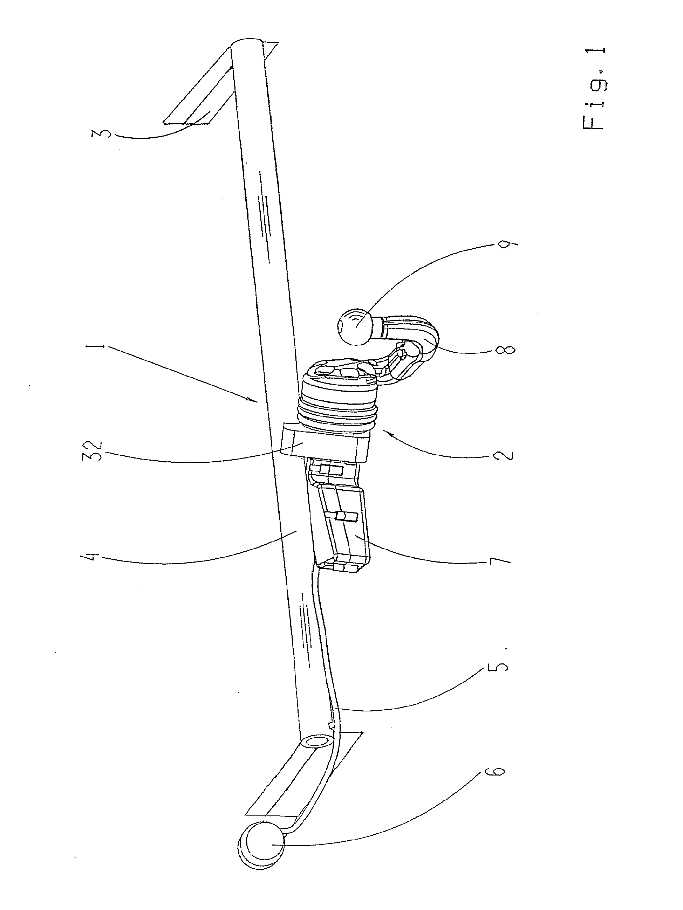

Fig. 1 ist eine perspektivische Ansicht einer Anhängerkupplung 1 mit einem Kugelschwenkmodul 2 gemäß einer Ausführungsform. Die Anhängerkupplung 1 ist an einem Querrohr 4 angeordnet, an welchem ebenfalls eine Längsanbindung 3 zur Anbringung an einem Fahrzeug vorgesehen ist sowie Kabel 5 und Stecker 6, um einen ebenfalls an dem Querrohr 4 angeordneten Antrieb 7 in Form wenigstens eines Elektromotors mit Energie zu versorgen. Zwischen dem Antrieb 7 und dem Schwenkmodul 2 ist ein Verbinder 32 zum Verbinden der beiden Bauteile angeordnet. Weiterhin ist an dem Schwenkmodul 2 eine schwenkbare Kugelstange 8 (Anhängerhaken) mit einer Kupplungskugel 9 vorgesehen. Der Antrieb 7 umfasst neben dem bereits erwähnten Elektromotor, welcher für die Entriegelung und Verriegelung der Kugelstange bzw. des Schwenkmoduls sorgt, noch einen weiteren Elektromotor, welcher für die Schwenkbewegung der Anhängerkupplung 1 zuständig ist. Hierauf wird unten noch genauer eingegangen.

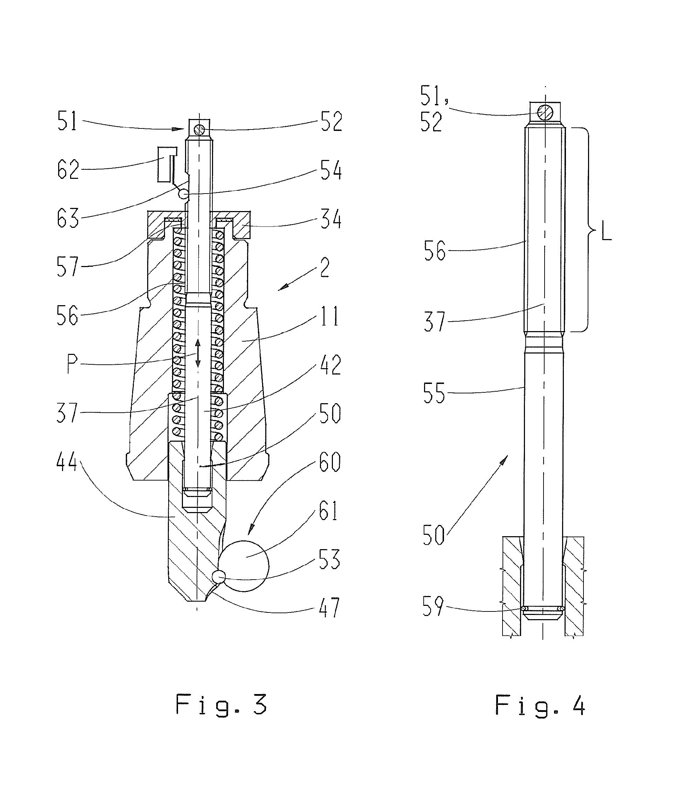

Fig. 2 zeigt zwei um 90° gegeneinander verdrehte Schnittansichten eines Kugelschwenkmoduls 2 mit Verriegelung und Entriegelung gemäß dem Stand der Technik zwecks eines besseren Verständnisses der Erfindung. In einer kreiszylindrischen Ausnehmung 42, welche in einem Kugelzapfen 11 des Kugelschwenkmoduls 2 ausgebildet ist, sind zur Verriegelung und Entriegelung gemäß dem Stand der Technik eine Zentralfeder (Druckfeder) 43 und ein Sperrbolzen 44 angeordnet. Der Sperrbolzen 44 ist in der Längsrichtung der Ausnehmung 42 innerhalb dieser verschiebbar geführt. Ferner ist ein kreiszylindrischer Führungskanal 45 in einer Gelenkkugel 10 des Kugelschwenkmoduls 2 vorgesehen, der zu der Ausnehmung 42 hin offen ist und sich in einer quer zur Längsrichtung verlaufenden Führungsrichtung durch die Wandung der Gelenkkugel 10 hindurch erstreckt. In dem Führungskanal 45 ist eine Einrichtung zum Verriegeln und Entriegeln des Schwenkmoduls vorgesehen, welche eine Kugel 61 und einen Führungsstift 46 umfasst, die bzw. der in der Führungsrichtung innerhalb der quer zur Ausnehmung 42 verlaufenden Bohrung verschiebbar ist bzw. sind. Die Kugel 61 wirkt mit einer Arbeitsfläche 47 (siehe Figur 3) des Sperrbolzens 44 zusammen, die schräg zur Längsrichtung ausgerichtet ist. Der Sperrbolzen 44 wird zum Verriegeln mittels der Zentralfeder 43 in Längsrichtung durch die Feder 43 nach unten in Richtung Kugel 10 gedrückt. Aufgrund der schrägen Arbeitsfläche 47 (siehe Figur 3) wird dadurch die Kugel 61 und entsprechend der Führungsstift 46 in der Führungsrichtung radial nach außen in eine muldenförmige Arretierungsausnehmung 12a in einem Gehäuse 12 des Kugelschwenkmoduls 2 gedrückt. Die Arretierungsausnehmung 12a ist durch einen in dem Gehäuse 12 fixierten Arretierungseinsatz 12b gebildet, in dem ein Druckstift 48 vorgesehen ist, der mittels einer Druckfeder 49 gegen den Führungsstift 46 in Richtung der Längserstreckung des Führungskanals 45 drückt. Da der Führungsstift 46 sowohl in den Führungskanal 45 als auch in die Arretierungsausnehmung 12a eingreift, ist die Gelenkkugel 10 starr in dem Gehäuse 12 fixiert. Wenn der Sperrbolzen 44 sich wieder nach oben bewegt und die Kugel 61 entsprechend radial einwärts von dem Führungsstift 46 abrückt, befindet sich der Sperrbolzen 44 in der Freigabeposition, in welcher der Führungsstift 46 durch den von der Druckfeder 49 mit Druck beaufschlagten Druckstift 48 aus der Arretierungsausnehmung 12a ausgerückt wird. Die Gelenkkugel 10 ist dann nicht mehr durch den Führungsstift 46 in dem Gehäuse 12 arretiert und kann sich relativ zu diesem bewegen.

Fig. 3 zeigt einen Schnitt durch ein Kugelschwenkmodul 2 zur Erläuterung einer Ausführung der Ver- und Entriegelungsfunktion nach der Erfindung. Um das System des Kugelschwenkmoduls 2 zu verriegeln und zu entriegeln, ist eine Spindel 50 vorgesehen, die sich linear in einer Ausnehmung 42 des Kugelzapfens 11 auf und ab bewegen kann. Der Antrieb der Spindel 50 erfolgt über ein Zahnrad 34, welches an einem Ende des Kugelzapfens 11 drehbar ortsfest bezüglich der Längsachse gelagert ist und über den Antrieb 7 (vgl. Figur 1) bzw. einen darin umfassten Elektromotor angetrieben ist. Der Elektromotor ist über eine in Figur 3 nicht gezeigte Welle mit dem Zahnrad 34 verbunden, sodass das Zahnrad 34 eine Drehbewegung um eine Mittelachse 37 entsprechend der Spindellängsachse 37 ausführt. Das Zahnrad 34 besitzt ein hier nicht im Detail dargestelltes Trapezinnengewinde 57, welches zu einem ebenfalls nicht im Detail dargestellten Trapezaußengewinde 56 der Spindel 50 passt. Wenn nun der Drehfreiheitsgrad der Spindel 50 blockiert wird, z. B. durch eine Führung in dem hinter dem Verbinder 32 (siehe Figur 1) angebrachten Motorgehäuse, oder wie hier in der Ausführungsform dargestellt durch eine Arretiereinrichtung 51 in Form eines Zylinderstifts 52, bewegt sich die Spindel 50 linear in Richtung des Doppelpfeils P innerhalb der Ausnehmung 42. Da der Zylinderstift 52 ein Mitdrehen der Spindel 50 mit dem Zahnrad 34 verhindert, bewegt sich die Spindel 50 innerhalb der Ausnehmung in dem Kugelzapfen 11 auf und ab. Die Spindel 50 ist mit dem Sperrbolzen 44 verbunden und verriegelt bzw. entriegelt das Verriegelungssystem über Drücken oder Ziehen am Sperrbolzen 44. Der Sperrbolzen 44 betätigt dabei eine Verriegelungseinrichtung 60. Die Verriegelungseinrichtung 60 fungiert als eine im Wesentlichen senkrecht zu dem Sperrbolzen 44 bewegbare Einrichtung zum Verriegeln und Entriegeln und umfasst eine Kugel 61. Ein Sensor 62 (Taster) erfasst dabei anhand einer seitlichen Ausnehmung 63 der Spindel 50 deren Position. Je nach Drehrichtung drückt die Spindel 50 den Sperrbolzen 44 in das Gehäuse 12 hinein oder zieht ihn heraus. Die Kugel 61 der Verriegelungseinrichtung 60 liegt dabei analog Figur 2 an einer Arbeitsfläche 47 des Sperrbolzens 44 an, die als Mulde im Sperrbolzen 44 ausgebildet ist. Bei einer definierten Eintauchtiefe der Spindel 50 in den Kugelzapfen 11, d. h. an einem Punkt, an dem eine seitliche Sicherungsrille 53 des Sperrbolzens 44 eine definierte Position bezüglich der Kugel 61 der Verriegelungseinrichtung 60 erreicht, ergibt sich dadurch ein sicherer Verriegelungszustand, welcher analog Figur 2 ausgebildet sein kann. Erst wenn dieser Zustand erreicht ist, wird ein vollständiges Verriegeln signalisiert, z. B. durch ein optisches oder ein akustisches Signal. Damit ist in der Betriebsposition bei ausgeschwenktem Kugelhals die Anhängerkupplung betriebsbereit. Bezugszeichen 54 kennzeichnet schematisch einen Schaltpunkt, an dem die Sicherungsrille 53 erreicht ist und an dem über die Kugel 61 analog zur Beschreibung der Figur 2 eine Verriegelung bewirkbar ist. Der Sensor 62 detektiert die Ausnehmung 63 der Spindel 50 bzw. deren Begrenzungen und folglich zumindest den Schaltpunkt 54. Über die Lage der Ausnehmung 63 relativ zum Sensor 62 kann somit die Position der Spindel 50 relativ zum Kugelzapfen 11 und damit die Verriegelungsposition detektiert werden.

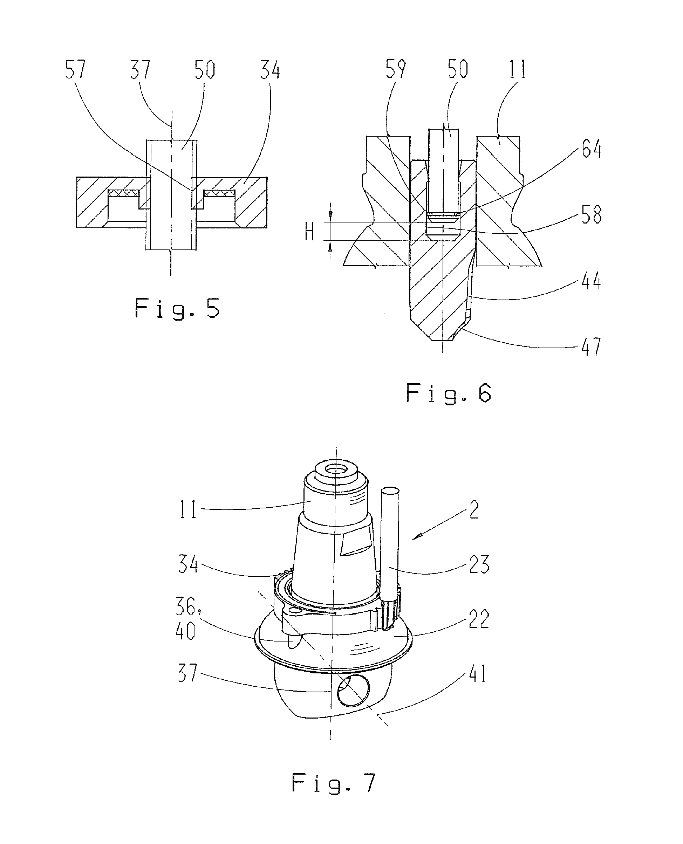

Fig. 4 zeigt eine Detailansicht einer Spindel 50, welche identisch oder zumindest ähnlich der Spindel in Fig. 3 aufgebaut ist. Die Spindel 50 ist an ihrem äußeren Umfang 55 mit dem bereits erwähnten Außengewinde 56 versehen, welches sich über eine Länge L erstreckt. An der Spindel 50 ist die Arretiereinrichtung 51 angeordnet. Durch den Zylinderstift 52 der Arretiereinrichtung 51 wird eine Drehung der Spindel 50 verhindert. In Zusammenwirkung der Spindel 50 mit dem speziell in Figur 5 dargestellten Zahnrad 34 bewirkt die Arretiereinrichtung 51, dass die Spindel 50 eine lineare Bewegung längs der Drehachse 37 des Zahnrades 34 innerhalb der Ausnehmung 42 ausführt, wie oben beschrieben, je nach Drehrichtung des Zahnrads 34.

Fig. 5 zeigt eine Schnittansicht des Zahnrads 34, welches hier erkennbar mit dem erwähnten Innengewinde 57 versehen ist. Das Innengewinde 57 steht in formschlüssigen Eingriff mit dem Außengewinde 56 der Spindel. Das Zahnrad 34 dreht sich um die Drehachse 37 und wirkt als Spindelmutter.

Fig. 6 zeigt eine Detailansicht des Sperrbolzens 44, welcher mit einer zylindrischen Ausnehmung 58 nach Art eines Sacklochs versehen ist, in welche bzw. welches die Spindel 50 eintaucht. An der Spindel 50 ist eine Raststruktur 64 ausgebildet, welche mit einem Sprengring 59 zusammenwirkt. Die Spindel 50 und der Sperrbolzen 44 sind relativ zueinander über einen bestimmten Hubbereich H längs der Achse 37 bewegbar, bis das Spindelende am Boden des Sacklochs anstößt. Auf diese Weise ist eine optimal steife, unnachgiebige Verriegelung erreichbar.

Abweichend von der Darstellung in den Figuren 3 bis 6 kann innerhalb der Ausnehmung 42 und um die Spindel 50 herum zusätzlich eine Druckfeder (nicht gezeigt) angeordnet sein. Dann ist es möglich, die Spindel gemäß Figur 6 nach erreichter optimaler Verriegelung ein Stück weit nach oben aus dem Sperrbolzen 44 herauszubewegen, so dass dann die Verriegelung nur bzw. zusätzlich durch die Druckfeder gehalten wird. Es resultiert eine gewisse mechanische Entkopplung von Spindel 50 und Sperrbozen 44, wodurch vorteilhafter Weise nicht alle auf die Kugelstange wirkenden Kräfte auch unmittelbar auf den Antriebsstrang für die Verriegelung einwirken.

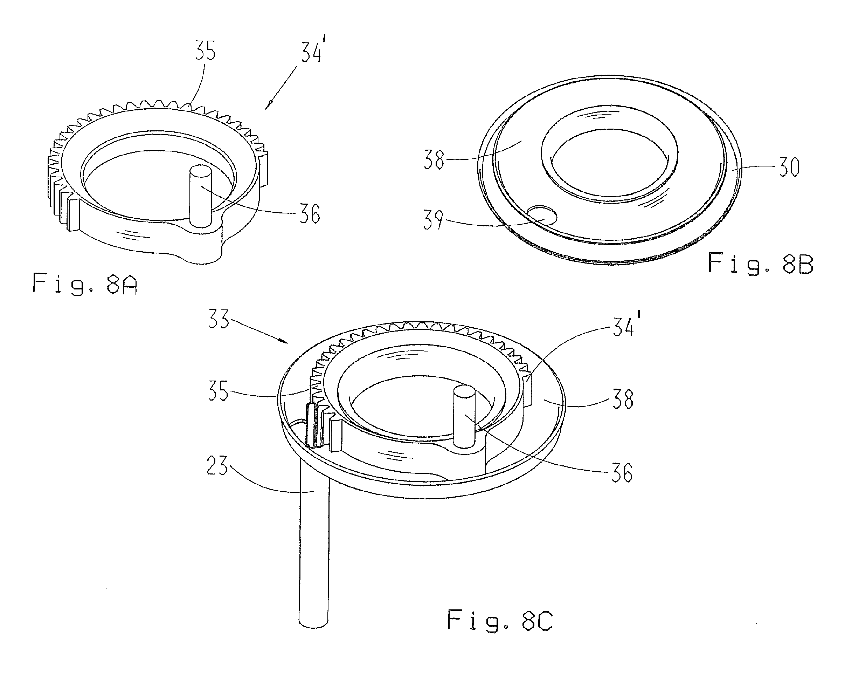

Fig. 7 ist eine perspektivische Ansicht eines gesamten Kugelschwenkmoduls 2 einschließlich der Bestandteile aus den Figuren 3 bis 6. Wie hier erkennbar ist, ist eine Kippachse 41 des Kugelschwenkmoduls 2 um 90° versetzt zu einem Mitnehmerstift 36 angeordnet. Hierdurch wird ermöglicht, dass eine Kippbewegung um die Achse 41 ausgeführt werden kann, ohne dass der Mitnehmerstift 36 in einer ebenfalls gezeigten Aufnahmeeinrichtung 40 verkantet, da er bei der Kippbewegung in diese ein- und austauchen kann. Auf die Elemente 36 und 41 wird weiter unten anhand der Figuren 8A bis E noch genauer eingegangen. Weiterhin ist hier die Drehachse 37 erkennbar, um welche der Kugelzapfen 11 drehbar ist. Diese Merkmale betreffend eine Dreh-/Kippbewegung des Kugelschwenkmoduls bzw. der Kugelstange können auch im Rahmen der vorliegenden Erfindung entsprechend realisiert sein.

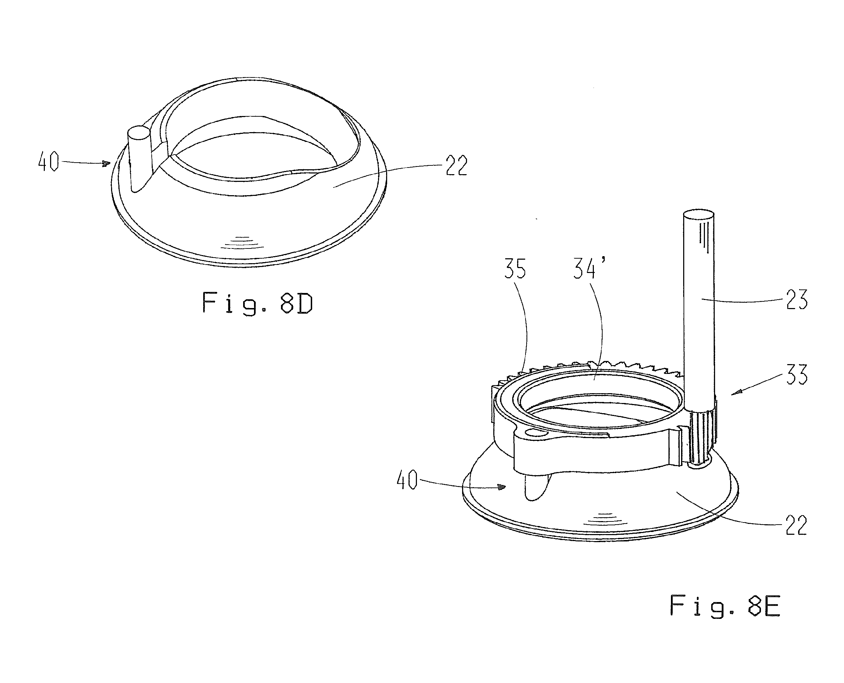

Nachfolgend wird ergänzend auf die Figuren 8A bis E Bezug genommen: Zum Ein- und Ausschwenken des Kugelschwenkmoduls 2 ist ein von dem Antrieb der Ver/Entriegelung separater Schwenkantrieb vorgesehen, dessen Anbtriebswelle 23 als Zweizahnwelle ausgebildet ist und im Eingriff mit dem Zahnrad 34' ist. Die Welle 23 ist Teil einer Antriebseinheit 33 und umfasst ein Zahnrad 34', welches mit einer Teilverzahnung mit eine Vielzahl an Zähnen 35 ausgebildet ist. In dem dargestellten Beispiel ist das Verhältnis der Anzahl der Zähnel etwa 1:12. An dem Zahnrad 34' ist in einem Bereich ohne Zähne der bereits erwähnte Mitnehmerstift 36 fest angeordnet, was speziell in Figur 8A dargestellt ist. Der Mitnehmerstift 36 ist in dem Zahnrad 34' eingepresst und wirkt als Mitnehmer für den Verschlussring 22, welcher das Gehäuse 12 (vgl. Figur 7) an einer Seite verschließt und somit drehfest mit dem Gehäuse verbinden ist. Das Zahnrad 34' ist drehbar in einem Zwischenring 38 gelagert, welcher auf dem Kugelzapfen 11 (analog Figur 2) des Kugelschwenkmoduls 2 aufgepresst ist. Weiterhin ist in Figur 8B ein Laufring 30 dargestellt, über welchen eine nicht gezeigte Dichtung drehbar mit dem Gehäuse 12 verbunden sein kann. In Figur 8D ist der Verschlussring 22 genauer dargestellt. Der Verschlussring 22 weist eine Aufnahmeeinrichtung 40 auf, in welche der Mitnehmerstift 36 in zusammengebautem Zustand, welcher in Figur 8E dargestellt ist, aufgenommen ist und in welcher der Mitnehmerstift 36 axial bezogen auf seine eigene Längserstreckung und radial bezogen auf den Verschlussring 22 hin und her bewegbar ist, wenn das Gehäuse 12 zusammen mit dem Verschlussring 22 um den Kugelzapfen schwenkt (Achse 41, vgl. Fig. 7). Der Zwischenring 38 ist mit einer Bohrung 39 versehen, was in Figur 8B dargestellt ist. Durch die Bohrung 39 ist die Abtriebswelle 23 im zusammengebauten Zustand hindurchführbar, wie in Figur 8D erkennbar ist.

Ein hier nicht dargestellter Elektromotor treibt die als Zweizahnwelle ausgebildete Abtriebswelle 23 an. Die Abtriebswelle 23 treibt das Zahnrad 34' an, welches auf dem Zwischenring 38 drehbar gelagert ist. Der Mitnehmerstift 36 ist fest mit dem Zahnrad 34' verbunden. Durch die Drehung des Zahnrads 34' wird der Mitnehmerstift 36 mitbewegt. Er greift in die Aufnahmeeinrichtung 40 des Verschlussrings 22 ein, wodurch eine Rotationsbewegung des Gehäuses 12 und somit der Kugelstange 8 (siehe Figur 1) erzeugt wird. Der Verschlussring 22 führt dabei zusammen mit der Gelenkkugel 10 des Kugelzapfens 11 eine Rotationsbewegung aus. Die zusätzliche Kippbewegung des Gehäuses bzw. der Kugelstange entsteht aus der Rotationsbewegung durch die Wirverbindungenbzw. Anlage einer nicht ebenen Regelfläche 15 an einem entsprechenden Regelelement in dem Gehäuse, das als Zwangsführungsstift 16 ausgebildet sein kann. Die Rotationsbewegung wird, wie oben beschrieben, von einem separaten Elektromotor über dessen Abtriebswelle 23, das Zahnrad 34' und den Mitnehmerstift 36 auf den Verschlussring 22 übertragen. Die Kippbewegung des Verschlussrings 22 zusammen mit dem Gehäuse 12 überträgt sich jedoch aufgrund der Aufnahmeeinrichtung 40 nicht auf den Mitnehmerstift 36.

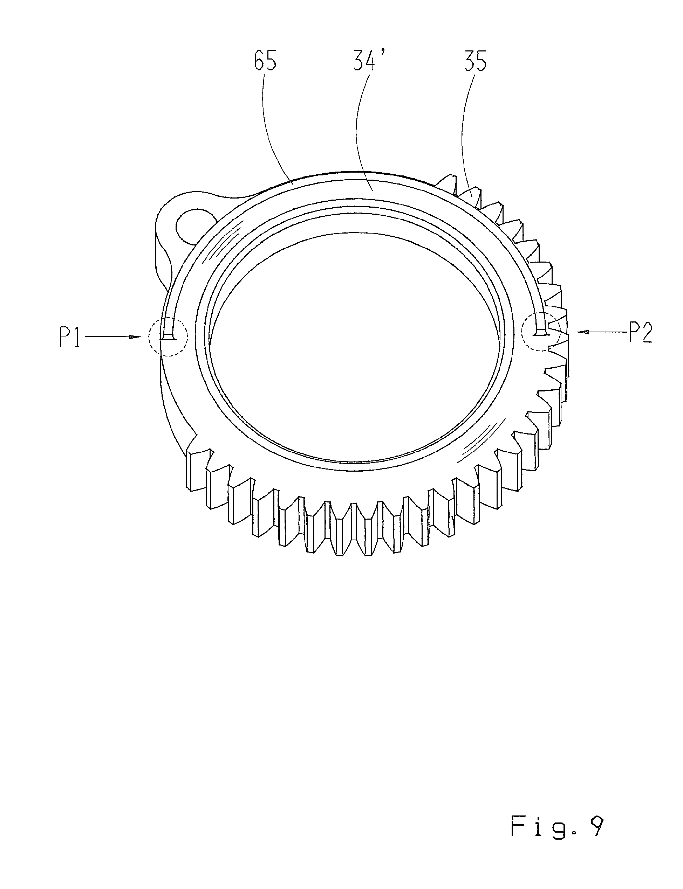

Fig. 9 zeigt eine perspektivische Darstellung des Zahnrads 34' gemäß den Figuren 8A bis E. Das Zahnrad 34' weist eine Teilverzahnung 35 auf. Auf einer Oberseite des Zahnrads 34' ist eine umlaufende halbkreisförmige Erhöhung 65 angeordnet. Die Enden der Erhöhung 65 stellen Orientierungspunkte für eine Detektion der Position des Zahnrads 34' mit einem Sensor (nicht dargestellt) dar, wie oben beschrieben. Der Anfangspunkt P1 der Erhöhung 65 entspricht einer ersten Position, insbesondere der Betriebsposition der Kugelstange 8, und der Endpunkt P2 der Erhöhung 65 entspricht einer zweiten Position, insbesondere der Ruheposition der Kugelstange 8. Ein entsprechendes Sensorsignal kann folglich zum Anzeigen dieser Positionen verwendet werden. Dabei ist die Erfindung jedoch grundsätzlich nicht auf einen bestimmten Sensortyp beschränkt. Beispielsweise kann anstelle der Erhöhung 65 auch vorgesehen sein, an dem Zahnrad 34' geeignet Permanentmagneten oder Ausnehmungen vorzusehen, um dessen Stellung mittels anderer, abgestimmter Sensorik zu bestimmen.

### Bezugszeichen

- 1: Anhängerkupplung
- 2: Schwenkmodul
- 3: Längsanbindung
- 4: Querrohr
- 5: Kabel
- 6: Stecker
- 7: Antrieb
- 8: Kugelstange
- 9: Kupplungskugel
- 10: Gelenkkugel
- 11: Kugelzapfen
- 12: Gehäuse
- 12a: Arretierungsausnehmung
- 12b: Arretierungseinsatz
- 15: Regelfläche
- 16: Zwangsführungsstift
- 22: Verschlussring
- 23: Abtriebswelle
- 30: Laufring
- 32: Verbinder
- 33: Antriebseinheit
- 34: Zahnrad
- 34': Zahnrad
- 35: Zähne
- 36: Mitnehmerstift
- 37: Drehachse, (Spindel-) Längsachse
- 38: Zwischenring
- 39: Bohrung
- 40: Aufnahmeeinrichtung
- 41: Kippachse
- 42: Ausnehmung
- 43: Zentralfeder
- 44: Sperrbolzen
- 45: Führungskanal
- 46: Führungsstift
- 47: Arbeitsfläche
- 48: Druckstift
- 49: Druckfeder
- 50: Spindel
- 51: Arretiereinrichtung
- 52: Zylinderstift
- 53: Sicherungsrille
- 54: Schaltpunkt
- 55: äußerer Umfang
- 56: Außengewinde
- 57: Innengewinde
- 58: Ausnehmung
- 59: Sprengring
- 60: Einrichtung zum Verriegeln und Entriegeln des Kugelschwenkmoduls
- 61: Kugel
- 62: Sensor
- 63: Ausnehmung
- 64: Raststruktur
- 65: Erhöhung

- P: Doppelpfeil
- H: Hubbereich
- P1: erste Position
- P2: zweite Position
- L: Länge

## Patentansprüche

1. Kugelschwenkmodul (2), insbesondere für eine Anhängerkupplung (1), welches einen Kugelzapfen (11) aufweist, welcher Kugelzapfen (11) eine Gelenkkugel (10) umfasst und in einem Gehäuse (12) gelagert ist, wobei in dem Kugelzapfen (11) eine Ausnehmung (42) vorgesehen ist, in welcher ein Sperrbolzen (44) axial verschiebbar angeordnet ist, um eine im Wesentlichen senkrecht zu dem Sperrbolzen (44) bewegbare Einrichtung (60) zum Verriegeln und Entriegeln des Kugelschwenkmoduls (2) zu betätigen, wobei zum motorischen Betätigen des Sperrbolzens (44) ein Antrieb (7) vorgesehen ist, insbesondere ein Elektromotor, welcher Antrieb (7) über eine Verbindung aus axial starren Elementen (23, 34, 50) mit dem Sperrbolzen (44) gekoppelt ist, **dadurch gekennzeichnet, dass** der Antrieb (7) und die genannte Verbindung dazu ausgebildet sind, den Sperrbolzen (44) innerhalb der Ausnehmung (42) motorisch in seine Verriegelungsstellung zu verschieben und dabei die Einrichtung (60) zum Verriegeln des Kugelschwenkmoduls (2) zu betätigen.

2. Kugelschwenkmodul (2) gemäß Anspruch 1, **dadurch gekennzeichnet, dass** die axial starre Verbindung ein erstes starres Element umfasst, welches erste starre Element mit dem Antrieb (7) gekoppelt ist, und ein zweites starres Element umfasst, welches zweite starre Element mit dem Sperrbolzen (44) gekoppelt ist.

3. Kugelschwenkmodul (2) gemäß Anspruch 2, **dadurch gekennzeichnet, dass** das erste starre Element ein Zahnrad (34) ist und das zweite starre Element eine Spindel (50) ist, wobei vorzugsweise das Zahnrad (34) konzentrisch um eine Spindelachse (37) der Spindel (50) herum angeordnet ist und mit der Spindel (50) zusammenwirkend ausgebildet ist.

4. Kugelschwenkmodul (2) gemäß Anspruch 3, **dadurch gekennzeichnet, dass** das Zahnrad (34) ein erstes Gewinde, insbesondere ein Innengewinde (57), und die Spindel (50) ein zweites Gewinde, insbesondere ein Außengewinde (56), aufweist, welche miteinander in Eingriff stehen.

5. Kugelschwenkmodul (2) gemäß Anspruch 3 oder 4, **dadurch gekennzeichnet, dass** das Zahnrad (34) durch den Antrieb (7) angetrieben ist, vorzugsweise über ein geeignetes Antriebsritzel.

6. Kugelschwenkmodul (2) gemäß einem der Ansprüche 3 bis 5, **dadurch gekennzeichnet, dass** das Zahnrad (34) an einem Ende des Kugelzapfens (11) drehbar gelagert ist.

7. Kugelschwenkmodul (2) gemäß einem der Ansprüche 3 bis 6, **dadurch gekennzeichnet, dass** die Spindel (50) in der Ausnehmung (42) linear aufwärts und abwärts bewegbar ist.

8. Kugelschwenkmodul (2) gemäß einem der Ansprüche 3 bis 7, **dadurch gekennzeichnet, dass** die Spindel (50) mittels einer Arretiereinrichtung (51), insbesondere mittels eines Zylinderstifts (52), hinsichtlich einer Drehbewegung arretierbar ist.

9. Kugelschwenkmodul (2) gemäß einem der Ansprüche 3 bis 8, **dadurch gekennzeichnet, dass** die Spindel (50) und der Sperrbolzen (44) kraft- und/oder formschlüssig miteinander verbunden sind, vorzugsweise über einen Sprengring (59).

10. Kugelschwenkmodul (2) gemäß einem der Ansprüche 3 bis 9, **dadurch gekennzeichnet, dass** durch den Antrieb (7) eine Relativbewegung von Spindel (50) und Sperrbolzen (44) in Richtung der Längsachse der Spindel (50) bewirkbar ist.

11. Kugelschwenkmodul (2) gemäß einem der Ansprüche 3 bis 10, **dadurch gekennzeichnet, dass** ein erster Sensor (62), insbesondere Taster, vorgesehen ist, welcher dazu ausgebildet ist, eine Position der Spindel (50) relativ zu den Kugelzapfen (11) in Richtung einer Längsachse der Spindel (50) zu bestimmen.

12. Kugelschwenkmodul (2) gemäß einem der Ansprüche 1 bis 11, **dadurch gekennzeichnet, dass** ein zweiter Sensor vorgesehen ist, welcher eine Position eines weiteren Zahnrads (34') detektiert, vorzugsweise eine Drehstellung, wobei das weitere Zahnrad (34') mit dem Gehäuse (12) gekoppelt ist, so dass über die Position des weiteren Zahnrads (34') eine Position des Gehäuses (12) und somit die Stellung einer Kugelstange (8) der Anhängerkupplung detektierbar ist.

13. Kugelschwenkmodul (2) gemäß Anspruch 12, **dadurch gekennzeichnet, dass** der zweite Sensor zum Detektieren einer ersten Position des weiteren Zahnrads (34'), welche einer Betriebsposition der Kugelstange (8) und der Verriegelungsstellung des Sperrbolzens (44) entspricht, und einer zweiten Position des weiteren Zahnrads (34'), welche einer Ruheposition der Kugelstange (8) entspricht, ausgebildet ist.

14. Kugelschwenkmodul (2) gemäß Anspruch 13, **dadurch gekennzeichnet, dass** die erste Position und die zweite Position, welche vorzugsweise um etwa 180° zueinander versetzt sind, jeweils eine Verriegelungsposition kennzeichnen.

15. Kugelschwenkmodul (2) gemäß einem der Ansprüche 1 bis 14, **dadurch gekennzeichnet, dass** die Gelenkkugel (10) eine insbesondere nicht ebene Regelfläche (15) aufweist, die mit einem an dem Gehäuse (12) vorgesehenen Regelelement (16), insbesondere einem Zwangsführungsstift (16), in Wirkverbindung steht, so dass diese Wirkverbindung eine Zwangsführung des Gehäuses (12) bewirkt, bei welcher das Gehäuse (12) bei einer Bewegung, insbesondere Drehbewegung um den Kugelzapfens (11) zwischen der Betriebsposition und der Ruheposition eine Drehbewegung um eine Drehachse (37) und eine Kippbewegung um eine Kippachse (41) ausführt, welche auf die Kugelstange (8) übertragbar ist.
